**Europäisches Patentamt**

(19) **European Patent Office**

**Office européen des brevets**

(11) Veröffentlichungsnummer: **0 039 896**
**B2**

(12) **NEUE EUROPÄISCHE PATENTSCHRIFT**

(45) Veröffentlichungstag der neuen Patentschrift:
26.07.89

(21) Anmeldenummer: 81103432.1

(22) Anmeldetag: 06.05.81

(51) Int. Cl.⁴: **C 08 F 236/10**, C 08 F 236/12,
C 08 F 212/02, D 04 H 1/64,
D 06 M 15/693, D 21 H 3/38,
D 06 N 3/10

(54) Verfahren zur Behandlung von Fasermaterialien.

(30) Priorität: 14.05.80 DE 3018385

(43) Veröffentlichungstag der Anmeldung:
18.11.81 Patentblatt 81/46

(45) Bekanntmachung des Hinweises auf die Patenterteilung:
14.11.84 Patentblatt 84/46

(45) Bekanntmachung des Hinweises auf die Entscheidung
über den Einspruch:
26.07.89 Patentblatt 89/30

(84) Benannte Vertragsstaaten:
BE DE FR GB IT NL

(56) Entgegenhaltungen:
EP-A- 0 009 745
DE-A- 2 005 974
DE-A- 2 429 817
DE-B- 1 191 683
DE-B- 2 417 705
FR-A- 2 117 656
FR-A- 2 244 787
GB-A- 848 808
US-A- 3 344 103

Chemiefasern/textil-industrie, Juni 1973, S. 570-574,
D2047E Sinn/Langenthal: Synthetische
Kautschuklatices für die Bindung von Vliesstoffen

Die Akte enthält technische Angaben, die nach dem
Eingang der Anmeldung eingereicht wurden und die
nicht in dieser Patentschrift enthalten sind.

(73) Patentinhaber: BAYER AG,
D-5090 Leverkusen 1 Bayerwerk (DE)

(72) Erfinder: Heins, Ferdinand, Dr., Linzerstrasse 17,
D-4019 Monheim-Baumberg (DE)
Erfinder: Matner, Martin, Dr., Dorfstrasse 14,
D-5068 Odenthal (DE)
Erfinder: Bross, Hermann-Josef, Dürscheider Weg 16,
D-5090 Leverkusen 3 (DE)

ACTORUM AG

## Beschreibung

Die Erfindung betrifft ein Verfahren zur Herstellung von Fasermaterial mit verbesserter Wasserbeständigkeit durch Behandlung der Fasermaterialien mit synthetischen carboxylierten Kautschuklatices mit Teilchendurchmessern unter 200 nm, die durch Einstufenpolymerisation in Gegenwart von einkernigen Alkylarylsulfonaten und organischen Peroxiden erhalten worden sind.

Es ist bekannt, daß man beispielsweise wasserfeste Faservliese durch Behandlung mit carboxylierten Kautschuklatices erhalten kann, wenn bei der Herstellung der Latices die Polymerisation in Gegenwart von nur geringen Mengen an Emulgatoren oder in völliger Abwesenheit von Tensiden durchgeführt wird (vgl. z.B. US-PS 2 847 404, 2 941 971 und 3 784 498). Die nach diesen Methoden der emulgatorarmen oder emulgatorfreien Polymerisation hergestellten Polymerisat-Dispersionen werden jedoch im allgemeinen unter Verwendung einer verhältnismäßig großen Menge eines Peroxodisulfats hergestellt und enthalten, insbesondere bei Polymerisationen im niedrigen pH-Bereich (pH <3,5), entsprechend große Mengen an organischem Sulfat, welches sich auf die Wasserfestigkeit der Polymerfilme negativ auswirkt. Andererseits besitzen emulgatorarme und emulgatorfreie Kautschuk-Dispersionen so hohe Oberflächenspannungen, daß es bei einigen hydrophoben Substraten zu Benetzungsschwierigkeiten kommen kann, beispielsweise bei stark gefetteten Lederfasern, bei bestimmten mineralischen Fasern und hydrophoben Synthesefasern aus Polyestern oder Polypropylen. Diese Benetzungsschwierigkeiten äußern sich oftmals darin, daß bestimmte Flächengewichte der daraus herzustellenden Endartikel nicht erreicht werden.

Es wurde nun gefunden, daß aus Fasermaterialien gefertigte Artikel mit verbesserter Wasserbeständigkeit erhalten werden, wenn man carboxylierte Kautschuklatices mit Teilchendurchmessern unter 200 nm einsetzt, die durch Einstufenpolymerisation bei pH-Werten unter 7 in Gegenwart von einkernigen Alkylarylsulfonaten und öllöslichen Initiatoren hergestellt worden sind. Derartige Latices ergeben nach dem Auftrocknen wasserfeste Filme und verleihen aufgrund ihrer hervorragenden Gelfestigkeit den behandelten Fasermaterialien sehr gute Abrieb- und Reißfestigkeiten im trockenen und nassen Zustand sowie eine gute Dimensionsstabilität.

Gegenstand der Erfindung ist ein Verfahren zur Herstellung von Fasermaterial mit verbesserter Wasserbeständigkeit durch Behandlung der Fasermaterialien mit einem synthetischen Kautschuklatex, hergestellt unter Verwendung eines Emulgators und eines Initiators durch Einstufenpolymerisation bei 5–60°C von

A) 0,5–6, vorzugsweise 1–3 Gew.-Teilen Methacrylsäure und

B) 94–99,5, vorzugsweise 97–99 Gew.-Teilen eines Gemisches aus

    a) 10–90 Gew-Teilen Butadien,

    b) 10–90 Gew.-Teilen Styrol und/oder (Meth)-acrylnitril, wobei die Menge an (Meth)-acrylnitril im Gemisch maximal 50 Gew.-Teile beträgt,

das dadurch gekennzeichnet ist, daß der eingesetzte Kautschuklatex einen mittleren Teilchendurchmesser von weniger als 200 nm besitzt, und als Emulgator ein einkerniges Alkylarylsulfonat und als Initiator ein öllösliches Peroxid eingesetzt werden.

Die Peroxide werden in Mengen von 0,01 bis 2,0, vorzugsweise von 0,02 bis 1,0 Gew.-Teilen eingesetzt. Als Beispiele seien erwähnt: Dibenzoylperoxid, Dilauroylperoxid, Cumolhydroperoxid, p-Menthanhydroperoxid, Pinanhydroperoxid und tert.-Butylhydroperoxid. Gegebenenfalls können diese Initiatoren durch wasserlösliche Reduktionsmittel wie z.B. Natriumformaldehydsulfoxylat und/oder Schwermetallionen wie Eisen-II- oder Eisen-III-Ionen aktiviert werden.

Als Emulgatoren werden in Mengen von 0,5 bis 5,0, vorzugsweise von 2,0 bis 5,0 Gew.-Teilen einkernige Alkylarylsulfonate mit geraden oder verzweigten $C_4$–$C_{18}$-Alkylresten verwendet. Als typische Vertreter seien die Alkalisalze der Decyl-, Dodecyl- und Hexadecylbenzolsulfonsäure genannt. Vorzugsweise setzt man jedoch die Ammoniumsalze oder am Stickstoff substituierte Ammoniumsalze der einkernigen Alkylarylsulfonsäuren ein. Daneben können gegebenenfalls zusätzlich 0,5 bis 2,0 Gew.-Teile anderer anionischer Emulgatoren mitverwendet werden. Man kann im sauren Bereich jedoch nur solche Emulgatoren verwenden, die sich von Säuren mit hohen $pK_B$-Werten ableiten, insbesondere Sulfate und Sulfonate. Beispielhaft genannt seien langkettige Fettalkoholsulfate und Alkylsulfonate, mehrkernige, gegebenenfalls alkylsubstituierte Arylsulfonate sowie deren Kondensationsprodukte mit Formaldehyd, langkettige Hydroxialkylsulfonate, Salze der Sulfobernsteinsäureester und sulfatierte Ethylenoxidaddukte.

Gegebenenfalls kann die Emulsionspolymerisation in Gegenwart von Polymerisationshilfsmitteln wie Puffersubstanzen, Chelierungsmitteln und Beschleunigern durchgeführt werden. Ebenso können Kettenübertragungsmittel wie z.B. Tetrabrommethan, Tetrabromethan, Bromethylbenzol, Alkohole, langkettige Alkylmercaptane und Dialkyldixanthogenate bei der Polymerisation mitverwendet werden. Die zu verwendende Art und Menge hängt u.a. von der Wirksamkeit der Verbindungen und der Menge des eingesetzten Diens ab und ist dem Fachmann geläufig.

Zur Durchführung der Einstufenpolymerisation wird die Gesamtmenge an Monomeren und Initiator vorgelegt. Die übrigen Zusätze können ganz oder teilweise vorgelegt werden. Man kann daher auch während der Polymerisation z.B. Kettenübertragungsmittel und Reduktionsmittel sowie Emulgatoren der obengenannten Art und Menge portionsweise zufügen.

Die Teilchengröße des Kautschuklatex kann nach Bedarf eingestellt werden. Die Methoden dafür sind dem Fachmann bekannt und z.B. beschrieben in Houben-Weyl, Methoden der organi-

schen Chemie, Bd. XIV/1, Georg Thieme Verlag, Stuttgart, 1961, S. 335ff. und S. 375ff. Es ist jedoch wesentlich, daß der mittlere Teilchendurchmesser weniger als 200 nm beträgt, um hohe Naßfestigkeiten der erfindungsgemäß behandelten Fasermaterialien zu erhalten.

Der Feststoffgehalt des Latex kann zwischen 1 und 65 Gew.-% liegen. Üblicherweise wird jedoch ein Latex mit einem Feststoffgehalt zwischen 30 und 50 Gew.-% eingesetzt.

Auch bei Verwendung großer Mengen an einkernigem Alkylarylsulfonat als Emulgator erhält man aus dem Kautschuklatex überraschenderweise wasserfeste Filme. Voraussetzung ist selbstverständlich, daß der Synthesekautschuk, gegebenenfalls durch Zusatz von Weichmachern, bei Raumtemperatur filmbildende Eigenschaften besitzt. Die Wasserfestigkeit der Filme kann anwendungstechnisch deshalb so bedeutungsvoll sein, weil bei einem Einsatz des Latex zur Bindung von Fasermaterialien häufig hohe Abrieb- und Reißfestigkeiten der entsprechenden Artikel im trockenen und nassen Zustand erforderlich sind. Das erfindungsgemäße Verfahren ist deshalb hervorragend zur Herstellung von Artikeln geeignet, die diesen Anforderungen genügen und eine gute Dimensionsstabilität besitzen müssen.

Nach dem erfindungsgemäßen Verfahren können Faseraufschlämmungen, Faservliese, Nadelfilze, Papier oder Pappe aus synthetischen oder natürlichen Fasern wie Cellulosefasern, Polyester-, Polyamid- und Polypropylenfasern, vegetabilisch und/oder chromgegerbten Lederfasern und mineralischen Fasern wie Glas-, Asbest-, Gesteins- und Schlackenfasern behandelt werden. Die Behandlung mit dem carboxylierten Kautschuklatex kann beispielsweise durch Imprägnieren, Sprühen, Kaschieren oder in Fällungsverfahren erfolgen.

Die folgenden Beispiele erläutern die Erfindung. Die Prozentangaben sind stets Gewichtsprozente.

1. Herstellung des carboxylierten Synthesekautschuk-Latex

Beispiel 1 (Latex A)

In einem 40-l-Autoklaven aus rostfreiem Stahl mit Kreuzbalkenrührer wird ein Gemisch aus 18 000 g Wasser, 7000 g Butadien-(1,3), 2600 g Styrol, 400 g Methacrylsäure und 50 g tert.-Dodecylmercaptan unter Verwendung von 200 g Natriumdodecylbenzolsulfonat als Emulgator und 5 g 80%igem tert.-Butylhydroperoxid und 2,5 g Natriumformaldehydsulfoxylatdihydrat (Rongalit C) als Initiatorsystem bei 35°C polymerisiert, bis ein Feststoffgehalt von 20% erreicht ist. Dann fügt man eine Lösung von 2,5 g Natriumformaldehydsulfoxylatdihydrat (Rongalit C) in 500 g Wasser hinzu und führt die Polymerisation bei 35°C bis zum nahezu vollständigen Umsatz der Monomeren zu Ende. Nach erreichter Endkonzentration wird mit einer Lösung von 80 g 25%igem Diethylhydroxylamin in 200 g Wasser abgestoppt, und der erhaltene Latex bei 40°C im Vakuum von restlichen Monomeren befreit. Man erhält einen Latex mit einem Feststoffgehalt von etwa 35%, einem pH von 3,6 und einem mittleren Teilchendurchmesser unter 80 nm (gemessen durch Lichtstreuung).

Beispiel 2 (Latex B)

Der in Beispiel 1 beschriebene Versuch wird wiederholt, jedoch die Hälfte des Styrols durch Acrylnitril, ersetzt. Man erhält einen Latex mit einem Feststoffgehalt von etwa 34%, einem pH von 4,2 und einem mittleren Teilchendurchmesser unter 80 nm (gemessen durch Lichtstreuung).

Beispiel 3 (Latex C)

Der im Beispiel 1 beschriebene Versuch wird unter Austausch der Gesamtmenge des Styrols durch Acrylnitril wiederholt. Der erhaltene Synthesekautschuk-Latex hat einen Feststoffgehalt von etwa 35%, einen pH-Wert von 5,7 und einen mittleren Teilchendurchmesser unter 80 nm (gemessen durch Lichtstreuung).

Vergleichsbeispiel 1 (Vergleichslatex A)

Man wiederholt Beispiel 1 unter Austausch der Gesamtmenge an Natrium-dodecylbenzolsulfonat durch ein Natriumsulfonat eines Gemisches langkettiger Paraffinkohlenwasserstoffe mit einer mittleren Kettenlänge von 15 Kohlenstoffatomen. Der erhaltene Vergleichslatex A besitzt einen Feststoffgehalt von etwa 35% und einen pH-Wert von 3,8. Der mittlere Teilchendurchmesser liegt unter 80 nm (gemessen durch Lichtstreuung).

Vergleichsbeispiel 2 (Vergleichslatex B)

Man wiederholt Beispiel 1, führt die Initiierung jedoch mit 20 g Ammoniumperoxodisulfat und 10 g Natriumdisulfit durch. Nach Erreichen eines Feststoffgehalts von 20% werden eine Lösung von 20 g Ammoniumperoxodisulfat in 250 g Wasser und eine Lösung von 10 g Natriumdisulfit in 250 g Wasser zugefügt, und die Polymerisation wie in Beispiel 1 zu Ende geführt. Nach erreichter Endkonzentration wird, wie in Beispiel 1 beschrieben, abgestoppt und entgast. Der erhaltene Vergleichslatex B besitzt eine Feststoffkonzentration von 32% und einen pH-Wert von 2,8. Der mittlere Teilchendurchmesser beträgt 118 nm (gemessen durch Lichtstreuung).

2. Prüfung der Wasserempfindlichkeit der Polymerisatfilme

Zur Prüfung der Wasserempfindlichkeit der Polymerisatfilme der Latices A, B und C und der Vergleichslatices A und B werden jeweils 5,0 ml des Synthesekautschuk-Latex in gleichmäßiger Schicht auf $10 \times 10 \ cm^2$ großen Glasplatten vollständig verteilt und bei Raumtemperatur während 48 Stunden zu zusammenhängenden Filmen aufgetrocknet. Die mit den Polymerisatfilmen überzogenen Glasplatten werden während 5 Stunden in Wasser von Raumtemperatur gelagert. Anschließend werden die Filme auf Lichtdurchlässigkeit und Haftung zur Glasplatte untersucht.

Man erhält folgende Resultate:

Latex A Film schwach weiß angelaufen, gute Haftung zur Glasplatte.

Latex B Film weniger weiß angelaufen als der von Latex A, gute Haftung zur Glasplatte.

Latex C Film völlig klar und transparent, sehr gute Haftung zur Glasplatte.

Vergleichslatex A Film weiß und undurchsichtig, läßt sich von der Glasplatte leicht entfernen.

Vergleichslatex B Film weiß und undurchsichtig, läßt sich von der Glasplatte noch leichter entfernen als der von Vergleichslatex A.

Die Synthesekautschuk-Latices A, B und C führen demnach zu wasserfesten Filmen mit guter Haftung zum Substrat, während die vergleichslatices wasserempfindliche Filme mit schlechter Haftung liefern.

3. Prüfung auf verschiedenen Substraten

3.1 Imprägnierung von Papier

Ein Papier, welches zur Herstellung von Naßschleif-Materialien verwendet wird und dementsprechend ein hydrophobes Verhalten zeigen soll, wird vergleichsweise mit Latex A und Vergleichslatex A imprägniert. An dem getrockneten Papier wird die Wasseraufnahme nach Cobb bestimmt (DIN 53 132). Die Wassermenge, welche von 1 m$^2$ Papierfläche während einer Einwirkungsdauer von 60 Sekunden unter Normbedingungen aufgesaugt wird, beträgt für Latex A: 10,9 g, für vergleichslatex A: 45,5 g. Latex A führt also gegenüber Vergleichslatex A zu wasserfesteren Papieren.

3.2 Imprägnierung von α-Cellulose-Pappe

Eine α-Cellulose-Pappe von 1,2 mm Dicke, welche zur Herstellung von Schuhinnensohlen-Materialien verwendet werden und dementsprechend einen guten Feuchtabrieb zeigen soll, wird vergleichsweise mit den Latices A und B und den Vergleichslatices A und B getränkt, so daß die Auflage etwa 30% Feststoff beträgt. Anschließend wird während 30 Minuten bei 110°C getrocknet.

Zur Bestimmung des Feuchtabriebs wird ein runder Stempel von 1 cm Durchmesser, welcher mit einem feucht gehaltenen groben Baumwollgewebe umhüllt ist, unter 2 kg Belastung während 500 Zyklen auf dem ausgerüsteten Material gerieben. Die mit den Latices A und B behandelten α-Cellulose-Pappen zeigen dabei eine wesentlich bessere Abriebfestigkeit als die mit den Vergleichslatices A und B getränkten Pappen.

3.3 Imprägnierung von Nadelfilzen

Aus reinen Polypropylen-Fasern bzw. reinen Polyamid-Fasern hergestellte Nadelfilze, welche als Auslegeware Verwendung finden sollen, werden jeweils mit Latex A und Vergleichslatex A in gleicher Weise imprägniert und nach dem Trocknen bei 130°C auf Naßabriebfestigkeit untersucht. Die Ausführung erfolgt in Analogie zum anwendungstechnischen Beispiel 3.2. Die Belastung des Stempels beträgt 3 kg während 1000 Zyklen. Die mit Latex A ausgerüsteten Nadelfilze auf Basis von Polypropylen- und Polyamid-Fasern zeigen gegenüber gleichen, jedoch mit Vergleichslatex A ausgerüsteten Materialien eine höhere Naßabriebbeständigkeit.

**Patentansprüche**

1. Verfahren zur Herstellung von Fasermaterial mit verbesserter Wasserbeständigkeit durch Behandlung der Fasermaterialien mit einem synthetischen Kautschuklatex, hergestellt unter Verwendung eines Emulgators und eines Initiators durch Einstufenpolymerisation bei 5–60°C von
A) 0,5–6 Gew.-Teilen Methacrylsäure und
B) 94–99,5 Gew.-Teilen eines Gemisches aus
 a) 10–90 Gew.-Teilen Butadien und
 b) 10–90 Gew.-Teilen Styrol und/oder (Meth)acrylnitril, wobei die Menge an (Meth)acrylnitril im Gemisch maximal 50 Gew.-Teile beträgt
dadurch gekennzeichnet, daß der eingesetzte Kautschuklatex einen mittleren Teilchendurchmesser von weniger als 200 nm besitzt, als Emulgator ein einkerniges Alkyl-Arylsulfonat und als Initiator ein öllösliches Peroxid eingesetzt werden.

2. Verfahren nach Anspruch 1, dadurch gekennzeichnet, daß der Kautschuk aus 1–3 Gew.-Teilen der Komponente A und 97–99 Gew.-Teilen der Komponente B aufgebaut ist.

**Claims**

1. Process for the production of fibre material with improved water resistance by treating the fibre materials with a synthetic rubber latex produced using an emulsifier and an initiator by one-step polymerisation at 5–60°C
A) 0.5–6 parts by weight of methacrylic acid and
B) 94–99.5 parts by weight of a mixture of
 a) 10–90 parts by weight of butadiene and
 b) 10–90 parts by weight of styrene and/or (meth)acrylonitrile, the quantity of (meth)-acrylonitrile in the mixture being no more than 50 parts by weight,
characterised in that the rubber latex used has an average particle diameter of less than 200 nm, a mononuclear alkyl aryl sulphonate is used as the emulsifier and an oil-soluble peroxide is used as the initiator.

2. Process according to Claim 1, characterised in that the rubber consists of 1–3 parts by weight of component A and 97–99 parts by weight of component B.

**Revendications**

1. Procédé de fabrication d'une matière fibreuse ayant une meilleure stabilité à l'eau en traitant les matières fibreuses avec un latex de caoutchouc synthétique préparé en utilisant un émulsionnant et un initiateur en soumettant, à une polymérisation à une étape et à 5–60°C:
A) 0,5–6 parties en poids d'acide méthacrylique, et B) 94–99,5 parties en poids d'un mélange comprenant:

    a) 10–90 parties en poids de butadiène,

    b) 10–90 parties en poids de styrène et/ou de (méth)acrylonitrile, la quantité de (méth)-acrylonitrile dans le mélange étant, au maximum, de 50 parties en poids

caractérisé en ce que les particules du latex de caoutchouc utilisé ont un diamètre moyen inférieur à 200 nm tandis que, comme émulsionnant, on utilise un alkyl-aryl-sulfonate mononucléaire et, comme initiateur, on utilise un peroxyde soluble dans les huiles.

2. Procédé suivant la revendication 1, caractérisé en ce que le caoutchouc est constitué de 1–3 parties en poids du composant A et de 97–99 partioes en poids du composant B.